# EUROPÄISCHE PATENTSCHRIFT

(11) **EP 1 506 715 B1**
(45) Veröffentlichungstag und Bekanntmachung des Hinweises auf die Patenterteilung: **09.01.2008**
(21) Anmeldenummer: 04012979.3
(22) Anmeldetag: 16.06.2004
(51) Int. Cl.: A23L 1/36, C11B 1/06, C11B 1/08

(54) **Verfahren zur Entfettung von Kokosnussfleisch**
Method for defatting coconut meat
Procede d'extration de pulpe de noix de coco

(30) Priorität: 18.07.2003 DE 10332719
(43) Veröffentlichungstag der Anmeldung: 16.02.2005
(73) Patentinhaber: Baensch, Werner, 37603 Holzminden (DE)
(72) Erfinder: Baensch, Werner, 37603 Holzminden (DE)

(56) Entgegenhaltungen:
- DE-A- 1 467 505
- DE-A- 2 422 640
- DE-B- 1 024 656
- DE-B- 1 035 825
- DE-C- 918 430
- US-A- 2 742 487
- US-A- 4 292 335

## Beschreibung

Die vorliegende Erfindung betrifft ein Verfahren zur Entfettung von Kokosnussfleisch.

In der DE 24 22 640 A1 ist ein Verfahren zur Herstellung von Kokosnussflocken und den daraus erhaltenen Produkten gezeigt und beschrieben. Dieses Verfahren sieht zur Schaffung eines weiterzuverarbeitenden Ölkuchens vor, die geerntete Kokosnuss zu entkernen, fein zu zerkleinern und das Kokosnussfleisch in einem geeigneten Druckgefäß auszupressen, und somit die Kokosmilch vom Ölkuchen abzutrennen. Dieser Ölkuchen wird mit der beim Aufbohren der Kokosnuss gewonnenen inneren Flüssigkeit und Wasser vermischt und einer weiteren Pressung unterworfen, um weiterhin Milch und einen zweiten Kuchen abzutrennen.

Die aus diesen Pressungen erhaltene gesamte Kokosnussmilch wird zentrifugiert, wobei man einen Rahm und eine entrahmte Milch erhält. Dabei liefert der Rahm nach entsprechender Entwässerung und Zentrifugierung Kokosnussöl, das für den Verzehr vorgesehen ist.

Es hat sich gezeigt, dass dieses Verfahren außerordentlich aufwendig ist, wobei es hier allerdings primär nicht um die Gewinnung von Öl, sondern um die Gewinnung von Flocken oder Pulver geht.

Gleichwohl ist in dieser Patentanmeldung mit der Nennung der französischen Patentschrift 1 564 857 ein Verfahren zur Behandlung des frischen Kerns der Kokosnuss beschrieben, das dem zuvor geschilderten ähnlich ist, denn auch hier wird die Kokosmilch vom Ölkuchen durch Pressung abgetrennt, dann eine entrahmte Milch gewonnen und der Rahm weiterbehandelt, um daraus das frische Kokosöl und ein Nahrungsprodukt zu gewinnen. Man erhält damit drei für die menschliche Ernährung wichtige Produkte, nämlich frisches Kokosnussöl, die konzentrierte Kokosmilch, ferner ein Produkt mit den Kokosnussproteinen, sowie für die tierische Ernährung als Nebenprodukt einen von seinen Fettstoffen teilweise ausgelaugten Ölkuchen.
Auch dieses Verfahren stellt sich sehr arbeitsintensiv dar, und die Effizienz der Gewinnung des Kokosnussöls ist nicht optimal.

Der vorliegenden Erfindung liegt die Aufgabe zugrunde, ein besonders effizientes und schonendes Entfettungsverfahren des essbaren Anteils des Kokosnussfleisches anzugeben.

Dies gelingt mit den Verfahrensschritten, wie sie im Anspruch 1 angegeben.sind.

Eine in den Unteransprüchen aufgezeigte Vorrichtung macht das Verfahren besonders wirtschaftlich, und ein weiterer Unteranspruch gibt Anregungen, wie das Verfahren besonders vorteilhaft ausgeführt werden kann.

Das Wesen der Erfindung besteht darin, dass die Trennung des Kokosfettes durch physikalische Bindung des Fettes an das Kokosnussfleisch herbeigeführt wird, so dass beim Abpressen der Kokosnussmilch vom Kokosnussfleisch die Fettanteile am Kokosnussfleisch haften bleiben, die dann bei einem darauffolgenden Nachbehandlungsvorgang vom Kokosnussfleisch separat abgetrennt werden.
Die physikalische Bindung der Fettanteile an das Kokosnussfleisch geschieht dabei dadurch, dass es auf Temperaturen in die Nähe bzw. bis unterhalb des Erstarrungszustandes des Fettes abgekühlt wird, so dass es aus der flüssigen in die feste Phase überführt wird. Beim Abkühlen ist es wichtig, dass diese nicht so weit geht, dass die wasserhaltigen Bestandteile der Kokosnussmilch gefrieren. Damit wäre eine Trennung von Fett und Milch nicht möglich.

Auf der Grundlage dieses neuartigen Trennverfahrens mit seinem außerordentlich schonenden Einfluß auf die Gewinnung der Kokosnusserzeugnisse lassen sich diese im weiten Umfang für die menschliche Ernährung verwenden, etwa als :
- fettreduzierte Kokosnussmilch
   (skimmed coconut milk)
- Kokosmilch-Puddings
   (coconut jellies)
- Kokosnussmilch-Joghurt
   (coconut milk yoghurt)
- Diätetische Brotaufstriche (Streichkäse)
   (diet-Spreadcheese)
- fettangereicherte Kokosnussraspeln
   (high fat dessicated coconut grindings)
- fettreduzierte, sprühgetrocknete Kokosnussmilch
   (skimmed spraydried coconut milkpowder)
- kalt gepresstes, natives Kokosnussöl
   (virgin coconut oil, without chemical refining)
- kosmetische Produkte aus diesem Öl
   cosmetic products based on virgin coconut oil)

Diese zuvor genannten Kokosnuss-Erzeugnisse lassen sich ohne weiteres in die Gruppe der diätetischen Lebensmittel einordnen, was sich aus der Tatsache ergibt, dass die fettreduzierte Kokosnussmilch frei von Cholesterin, Laktose und Gluten ist. Dementsprechend fallen auch die daraus hergestellten o.a. Folgeprodukte in diese Warengruppe.

Anhand eines Beispiels soll das Herstellungsverfahren beschrieben werde, wobei hier nur die wesentlichen Verfahrensschritte beschrieben sind:

In einem ersten Arbeitsvorgang werden die erntefrischen Kokosnüsse aufgeschlagen, halbiert und mittels einer Rätzmühle in feine Kokosraspeln zerrieben.

In dem darauf folgenden Verfahrensschritt werden die Kokosraspeln durch eine kontinuierlich oder diskontinuierlich arbeitende Kühlanlage auf eine Temperatur in die Nähe bzw. unterhalb des Schmelzpunktes von Kokosfett abgekühlt, bis eine solche Eindickung (Viskosität) der in den Kokosraspeln enthaltenen Fette eingetreten ist, z. B. auf 15°C, bei der in einem anschliessenden Pressvorgang ein Abtrennen des Fettes von den Raspeln nicht mehr erfolgen kann. Dieser Abkühlungsprozess darf nicht so weit fortschreiten, dass die wässrigen Anteile in den Kokosraspeln kristallisieren.

Der weitere Verfahrensschritt sieht vor, dass die abgekühlten, Kokosraspeln durch eine Presse oder Zentrifuge von der Kokosmilch befreit werden. Damit wird die fettreduzierte, wässrig/flüssige Kokosmilch von dem erstarrten Kokosfett abgetrennt. Die dabei gewonnene fettreduzierte Kokosmilch, die außerordentlich reich an Inhaltsstoffen, wie Kohlehydrate, Eiweiß, Mineralstoffe, Vitamine sowie sonstigen sekundären Pflanzenbegleit- und Aromastoffen in natürlicher Zusammensetzung ist, kann einer weiteren Verwendung als Nährmittel zugeführt werden.

In einem weiteren Verfahrensschritt werden die fettreichen Kokosraspeln wieder auf eine Temperatur oberhalb des Schmelzpunktes von Kokosfett erwärmt, z.B. 35° C, wodurch das Kokosfett in den flüssigen Zustand übergeht.

Alsdann erfolgt in einem nächsten Verfahrensschritt eine neuerliche, kontinuierliche oder diskontinuierliche Pressung, wobei die Fettanteile, um deren schonende Gewinnung es in dem vorliegenden Verfahren geht, gewonnen werden. Dieses Kokosfett, auch als "virgin coconut oil" bekannt, kann dann aufgrund seiner hohen Reinheit einer weiteren Verarbeitung für die menschliche Ernährung zugeführt werden.

Der verbleibende Presskuchen wird schließlich mit Wasser oder anderen geeigneten Lösungsmitteln von Resten der Kokosmilch und des Kokosfettes in an sich bekannter Weise durch Waschung befreit. Die dabei anfallenden zellulosehaltigen Faserstoffe können ebenfalls einer weiteren Verwendung zugeführt werden, sie sind lignin-frei und eignen sich beispielsweise als Rohstoff zur Papierherstellung sowie für zahlreiche technische, auch lebensmitteltechnische weitere Anwendungen.

Als besonders vorteilhaft in dem neuen Verfahren hat sich die Anwendung einer Wärmepumpe gezeigt, wobei die Abkühlung der geraspelten Kokosspäne gemäß Verfahrensschritt b) an der Kaltseite, also dem Verdampfer-Wärmetauscher, und die Wiedererwärmung der Kokosraspeln nach Abtrennung der Kokosmilch gem Verfahrensschritt d) an der Warmseite, also an dem Kondensator-Wärmetauscher erfolgt. Damit werden die Kosten für die thermischen Vorgänge an diesem Verfahren auf ein Minimum reduziert, denn es hat sich gezeigt, dass ohne zusätzliches Einbringen von Energie die Wärmepumpe bei geeigneter Leistungswahl im Hinblick auf die zu verarbeitende Raspelmasse an der Verdampferseite Temperaturen um 10°C bei einer Kondensator-Temperatur von ca. 40°C erreicht, also Temperaturen, die bestens für das Abkühlen bzw. Wiedererwärmen der Kokosnussraspeln geeignet sind.

Das neuartige Verfahren erweist sich als technisch so unkompliziert, dass es ohne weiteres auch in Ländern angewendet werden kann, die kein besonders hohes technisches Fertigungs-Niveau aufweisen, also etwa in Ländern, in denen die Kokosnuss gewonnen wird. Dies ist insoweit wichtig, als die Verarbeitung der dort gewonnenen Ernährungsstoffe auch dort konsumiert werden können. Insoweit wird dieses neuartige Verfahren auch einen bedeutenden Anteil an der Verbesserung der weltweiten Ernährungsversorgung haben.

## Patentansprüche

1. Verfahren zur Entfettung von Kokosnussfleisch, enthaltend folgende Verfahrensschritte:
a) Abtrennung des Kokosnussfleisches von der Kokosnussschale unter Bildung von Kokosnussraspeln,
b) Abkühlen des geraspelten Kokosnussfleisches auf Temperaturen in die Nähe bzw. unterhalb des Schmelzpunktes von in den Kokosnussraspeln enthaltenden Kokosfettes, jedoch oberhalb des Gefrierpunktes von Wasser.
c) Pressen der gekühlten Kokosnussraspeln und Abtrennen der nunmehr fettreduzierten Kokosmilch,
d) Erwärmen des Kokosnussraspeln auf Werte oberhalb des Schmelzpunktes des in den Kokosnussraspeln verbliebenen Kokosfettes, d.h. Verflüssigung des Kokosfettes.
e) Neuerliches Pressen der Kokosnussraspeln und Abtrennung und Gewinnung des Kokosfettes, nämlich Virgin Coconut Oil.
f) Waschung und Trocknung der cellulosehaltigen Faserstoffe aus dem Kokosnussfleisch.

2. Verfahren gemäß Anspruch 1, **dadurch gekennzeichnet,**
**dass** für die Verfahrensschritte b) und d) eine Wärmepumpe eingesetzt wird, an deren Verdampferseite, nämlich dem Verdampferwärmetauscher, die Abkühlung ,und an deren Kondensatorseite, nämlich dem Kondensatorwärmetauscher, die Wiedererwärmung der Kokosnussraspeln erfolgt.

3. Verfahren nach Anspruch 1 oder 2, **dadurch gekennzeichnet,**
**dass** die Pressvorgänge mittels Zentrifugen erfolgen.

## Claims

1. Process for defatting coconut meat, the process comprising the steps of:
a) separating the coconut meat from the coconut shell creating coconut gratings;
b) cooling the temperature of the separated coconut gratings to a value near or below the melting point of the coconut oil containing in the separated coconut gratings but above the freezing point of water;
c) pressing the so cooled coconut gratings to separate the fat reduced coconut milk;
d) heating the coconut gratings to a temperature above the melting point of the remaining coconut oil, that means liquefaction of the coconutfat;
e) anew pressing the coconut gratings to separate and isolate the coconut oil, namely Virgin Coconut Oil;
f) washing and drying the cellulose-containing fiber material from the coconut meat.

2. Process according to claim 1, **characterised**
**in** realisating the steps b) and d) by using a heat-pump with an evaporator side, namely the evapoator heat exchanger for cooling and a condensator side, namely the condensator heat exchanger for heating the coconut gratings.

3. Process according to claim 1 or 2, wherein the said pressing steps are carried out by a centrifuge.

## Revendications

1. Procede d' extration de pulpe de noix de coco comprenant d'actions suivantes :
a) Séparer la pulpe du noix de coco de la peau de noix de coco sous création des râpes de noix de coco.
b) Refroidir la température des râpes séparées de la noix de coco jusqu'à une valeur près ou au-dessous du point de fusion de l'huile de noix de coco contenue dans les râpes de noix de coco, mais au-dessus du point de congélation de l'eau.
c) Pressurer les râpes de noix de coco refroidis et séparer le lait de coco maintenant graisse réduite.
d) Echauffer les râpes de noix de coco jusqu à une valeur au-dessus du point de congélation de l'huile de noix de coco restante, c'est-à-dire liquéfaction de l'huile de coco.
e) Pressurer de nouveau les râpes de noix de coco pour séparer et isoler l'huile de coco, à savoir Virgin Coconut Oil.
f) Laver et sécher les fibrines cellulose de la pulpe de noix de coco.

2. Procédure selon droit 1, **caractérisé**
**en** réalisant les actions b) et d) par usage d'une thermopompe avec une côté d'évaporateur, à savoir l'échangeur thermique d'évaporateur pour le refroidissement et une côté du condensateur, à savoir l'échangeur thermique du condensateur pour l'échauffement des râpes de noix de coco.

3. Procédure selon droit 1 ou 2, **caractérisé**
**que** les actions de pressurage seront faites moyennant des centrifugeuses.
